# FASCICULE DE BREVET EUROPEEN

(11) **EP 1 916 472 B1**
(45) Date de publication et mention de la délivrance du brevet: **10.08.2011**
(21) Numéro de dépôt: 07118664.7
(22) Date de dépôt: 17.10.2007
(51) Int. Cl.: F21S 8/10, F21W 101/12, F21W 101/14, F21Y 101/02

(54) **Dispositif d'éclairage ou de signalisation comportant deux sources lumineuses agencées sur les deux faces d'un support commun**
Fahrzeugsleuchte mit zwei auf beiden Seiten derselben Trägerplatte angeordneten Lichtquellen
Vehicle lighting device with two light sources disposed on both sides of a common mounting plate

(30) Priorité: 27.10.2006 FR 0609480
(43) Date de publication de la demande: 30.04.2008
(73) Titulaire: VALEO VISION, 93012 Bobigny (FR)
(72) Inventeur: Vogt, Henning, 89340, Chaumont (FR); Godbillon, Vincent, 75011, Paris (FR)

(56) Documents cités:
- WO-A-2005/028250
- WO-A-2006/111805
- FR-A- 2 829 831
- FR-A- 2 858 681
- US-A1- 2004 223 338
- US-B1- 6 280 480

## Description

L'invention concerne un dispositif d'éclairage ou de signalisation pour véhicule automobile qui comporte au moins une première source lumineuse ponctuelle qui est agencée sur une première face d'un support horizontal, et qui comporte un réflecteur pour réfléchir les rayons lumineux selon la direction globale d'un axe optique longitudinal.

L'invention concerne plus particulièrement un dispositif d'éclairage ou de signalisation pour véhicule automobile qui est susceptible d'émettre un faisceau lumineux selon un axe optique longitudinal, et qui comporte :
- au moins une première source lumineuse ponctuelle supérieure qui est agencée sur une première face supérieure d'un support rigide en forme de plaque horizontale, et qui émet des rayons lumineux selon la direction globale d'un axe d'émission sensiblement vertical ;
- au moins un premier réflecteur qui est associé à la première source lumineuse supérieure, et qui comporte un foyer optique qui est agencé sur la première source lumineuse associée de manière à réfléchir dans la direction de l'axe optique les rayons lumineux émis par la première source lumineuse ;
- au moins une deuxième source lumineuse ponctuelle inférieure qui est agencée sous la deuxième face inférieure dudit support rigide ;
- au moins un deuxième réflecteur qui est associé à la deuxième source lumineuse inférieure et qui comporte un foyer optique qui est agencé sur la deuxième source lumineuse associée de manière à réfléchir dans la direction de l'axe optique les rayons lumineux émis par la deuxième source lumineuse.

Les véhicules automobiles actuels comportent de nombreux équipements qui doivent être agencés dans des espaces restreints.

De plus, les dispositifs d'éclairage et de signalisation, tels que les feux stop, sont des éléments qui, par leur forme originale, permettent de distinguer un véhicule d'un constructeur des autres véhicules présents sur le marché.

Pour satisfaire à ces deux contraintes, il est connu de réaliser des dispositifs de signalisation équipés de sources lumineuses ponctuelles telles que des diodes électroluminescentes dites "de puissance".

Ces diodes électroluminescentes permettent notamment de produire un faisceau lumineux intense en occupant un encombrement très réduit par rapport aux lampes à gaz classiques.

De plus, il est possible d'agencer une pluralité de diodes électroluminescentes selon des motifs très variés afin de produire un faisceau lumineux ayant une forme originale.

Les diodes électroluminescentes sont généralement agencées sur une face d'un support formant une plaque de circuit imprimé qui permet d'alimenter la diode électroluminescente en électricité.

Ce type d'agencement est par exemple utilisé pour les feux de stop arrière.

Ainsi, il est connu d'agencer les diodes électroluminescentes selon un motif linéaire de manière à produire un faisceau lumineux linéaire.

Cependant, un tel feu stop ne possède pas des caractéristiques photométriques optimales.

Pour améliorer les caractéristiques optiques, la seule solution connue est de rajouter des diodes électroluminescentes et leur support associé. Cependant, cette solution est onéreuse et encombrante.

Le document WO 2005/028250 A montre un tel dispositif.

Pour résoudre ce problème l'invention propose un dispositif d'éclairage ou de signalisation du type décrit précédemment, où les premier et deuxième réflecteurs forment un bloc qui comporte un logement destiné à recevoir le support rigide des sources lumineuses ponctuelles supérieure et inférieurs, le logement étant formé par la face horizontale inférieure d'une première aile horizontale supérieure qui s'étend vers l'arrière depuis le bord d'extrémité inférieur du premier réflecteur et qui est agencée au-dessus du support, le bord d'extrémité supérieur du deuxième réflecteur étant relié au bord d'extrémité arrière de la première aile supérieure par l'intermédiaire d'une deuxième aile horizontale inférieure parallèle à la première aile supérieure, et qui est agencée au-dessous du support.

Selon d'autres caractéristiques de l'invention :
- la deuxième source lumineuse inférieure est décalée horizontalement dans le plan du support par rapport à la première source lumineuse supérieure de manière que la chaleur émise par chaque source lumineuse soit absorbée par deux portions distinctes du support ;
- le dispositif d'éclairage ou de signalisation comporte une pluralité de sources lumineuses supérieures qui sont agencées sur la face supérieure du support commun ;
- le dispositif d'éclairage ou de signalisation comporte une pluralité de sources lumineuses inférieures qui sont agencées sous la face inférieure du support commun ;
- les sources lumineuses d'une même face sont alignées globalement selon un motif linéaire globalement transversal qui s'étend dans un plan horizontal de manière que le dispositif produise au moins un faisceau lumineux linéaire transversal ;
- le contour du support épouse le motif linéaire d'alignement des sources lumineuses ;
- le motif linéaire est courbé dans un plan vertical, le support commun étant courbé de manière à épouser la courbe du motif d'alignement ;
- les sources lumineuses sont agencées selon un motif matriciel ;
- les sources lumineuses ponctuelles sont des diodes électroluminescentes ;
- le support rigide est réalisé venu de matière en une seule pièce.

D'autres caractéristiques et avantages apparaîtront au cours de la lecture de la description détaillée qui va suivre pour la compréhension de laquelle on se reportera aux dessins en annexe parmi lesquels :
- la figure 1 est une vue arrière qui représente un véhicule automobile équipé d'un feu de signalisation réalisé selon les enseignements de l'invention ;
- la figure 2 est une vue en perspective éclatée qui représente le feu de signalisation de la figure 1 comportant un support de source lumineuse et un réflecteur ;
- la figure 3 est une vue en coupe longitudinale verticale du dispositif de signalisation de la figure 2 ;
- la figure 4 est une vue de dessus qui représente le support de source lumineuse du dispositif de la figure 2.

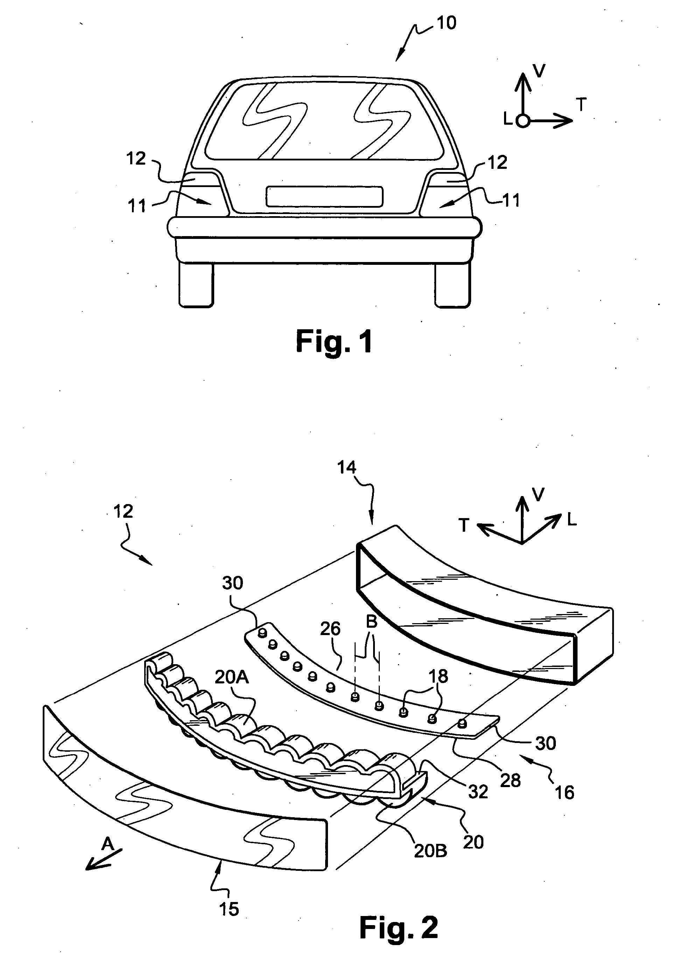

On adoptera pour la suite de la description et de manière non limitative une orientation longitudinale, verticale et transversale indiquée par le trièdre "L,V,T" aux figures 1 et 2.

Par la suite, des éléments identiques, analogues ou similaires, seront désignés par des mêmes numéros de référence.

On a représenté à la figure 1 l'arrière d'un véhicule automobile 10 qui comporte des blocs 11 latéraux de feux d'éclairage et de signalisation. Les blocs latéraux 11 gauche et droit sont agencés dans les ailes arrière du véhicule 10 de part et d'autre du hayon du véhicule 10.

Chaque bloc 11 comporte notamment un dispositif de signalisation 12 tel qu'un feu de stop latéral 12 droit ou gauche. Chaque dispositif de signalisation 12 est susceptible d'émettre un faisceau lumineux de forme linéaire transversale selon un axe optique "A" d'orientation longitudinale qui est dirigé vers l'arrière, comme illustré à la figure 2.

Les deux dispositifs de signalisation 12 étant similaires, la description sera faite en référence à un seul des dispositifs de signalisation 12.

Le dispositif de signalisation 12 est ici en forme de barrette horizontale courbée dans un plan horizontal de manière à épouser la forme galbée des ailes latérales arrière du véhicule 10.

Comme représenté plus en détail à la figure 2, le dispositif de signalisation 12 comporte un boîtier 14 qui est fermé vers l'arrière par une vitre de protection 15.

Le boîtier 14 renferme un support 16 qui porte une pluralité de sources lumineuses ponctuelles 18 et des réflecteurs 20 dont chacun est associé à une source lumineuse.

Les sources lumineuses sont ici des diodes électroluminescentes 18 dites "de puissance" qui émettent des rayons lumineux très intenses selon la direction globale d'un axe d'émission "B" qui est ici vertical.

Les diodes électroluminescentes 18 sont portées par le support 16 qui forme une plaque horizontale rigide. Le support 16 comporte une face supérieure 22 et une face inférieure 24. Son contour est délimité par un bord avant 26, un bord arrière 28 et deux bords latéraux 30.

Le support 16 comporte des circuits imprimés qui sont susceptibles d'alimenter les diodes électroluminescentes 18 en électricité.

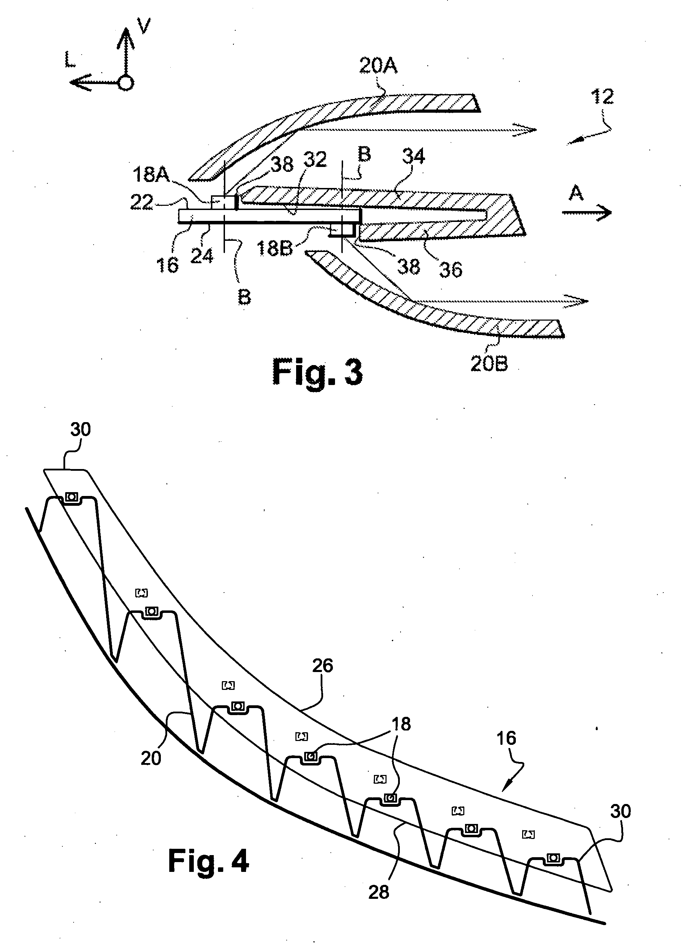

Comme représenté à la figure 3, une première partie des diodes électroluminescentes 18A est plus particulièrement agencée sur la face supérieure 22 du support 16. Ces diodes électroluminescentes seront par la suite appelées diodes électroluminescentes supérieures 18A. Les diodes électroluminescentes supérieures 18A sont ici alignées selon un motif linéaire qui suit une courbe horizontale qui épouse la forme de l'aile arrière du véhicule 10. Chaque diode électroluminescente supérieure 18A émet des rayons lumineux vers le haut selon un axe vertical d'émission "B" associé.

Chaque réflecteur 20 comporte un foyer optique qui est agencé sur la diode électroluminescente 18 associée. Chaque réflecteur 20 comporte plus particulièrement une face interne concave par exemple une forme parabolique ou ellipsoïdale, qui est susceptible de réfléchir les rayons lumineux émis par la diode électroluminescente associée 18 globalement selon la direction de l'axe optique "A" vers l'arrière.

Plus particulièrement, comme illustré à la figure 3, une première partie 20A des réflecteurs 20 est agencée au-dessus des diodes électroluminescentes supérieures 18A associées de manière à réfléchir les rayons émis par les diodes électroluminescentes supérieures 18A vers l'arrière selon la direction globale de l'axe optique "A". Ces réflecteurs seront donc appelés réflecteurs supérieurs 20A.

Les réflecteurs supérieurs 20A sont alignés selon une courbe parallèle au motif linéaire des diodes électroluminescentes supérieures 18A, comme illustré à la figure 2.

Les réflecteurs supérieurs 20A sont avantageusement réalisés venus de matière en une seule pièce, formant ainsi une barrette qu'il est facile de positionner et de fixer dans le boîtier 14.

Selon les enseignements de l'invention, une deuxième partie des diodes électroluminescentes 18B est agencées sous la face inférieure 24 du support 16. Ces diodes électroluminescentes seront appelées diodes électroluminescentes inférieures 18B par la suite.

Ainsi, les diodes électroluminescentes supérieures 18A et les diodes électroluminescentes inférieures 18B sont agencées sur les deux faces 22, 24 d'un support commun 16 qui est réalisé en une seule pièce.

Chaque diode électroluminescente inférieure 18B émet des rayons lumineux vers le bas selon la direction de l'axe vertical d'émission "B" de la diode électroluminescente 18B.

Une deuxième partie 20B des réflecteurs 20 est associée aux diodes électroluminescentes inférieures 18B. Ces réflecteurs 20B sont agencés au-dessous de la face inférieure 24 de la plaque de support 16. Ces réflecteurs seront appelés réflecteurs inférieurs 20B par la suite.

Les réflecteurs 20B sont ici similaires aux réflecteurs supérieurs 20A. Chaque réflecteur inférieur 20B comporte ainsi un foyer optique qui est agencé sur la diode électroluminescente inférieure 18B associée de manière à réfléchir les rayons lumineux émis par la diode électroluminescente inférieure 18B vers l'arrière selon la direction globale de l'axe optique "A".

Les diodes électroluminescentes inférieures 18B sont alignées selon le même motif linéaire transversal que les diodes électroluminescentes supérieures 18A.

Les diodes électroluminescentes 18 émettent de la chaleur. Cette chaleur est généralement absorbée, au moins en partie, par la portion de support 16 sur laquelle la diode électroluminescente 18 est agencée. Pour la suite de la description et pour les revendications, on définit une portion de support 16 comme la portion de face du support 16 sur laquelle une diode électroluminescente 18 est agencée, ainsi que l'épaisseur du support 16 qui absorbe la chaleur et la portion de face opposée.

Une portion de support 16 s'étend avantageusement autour de la diode électroluminescente associée 18 au moins sur un disque qui absorbe la majorité de la chaleur émis par la diode électroluminescente associée 18.

Pour éviter que le support 16 ne soit surchauffé par la forte concentration de diodes électroluminescentes 18 sur ses deux faces 22, 24, les diodes électroluminescentes inférieures 18B sont décalées horizontalement dans le plan du support 16 par rapport aux diodes électroluminescentes supérieures 18A, de manière qu'une portion de support 16 ne comporte qu'une unique diode électroluminescente 18 sur l'une ou l'autre de ses faces 22, 24, c'est-à-dire que chaque diode électroluminescente 18 est portée par une portion distincte de support 16.

Ainsi, chaque portion de support 16 absorbe la chaleur provenant d'une unique diode électroluminescente 18. En d'autres termes, comme représenté à la figure 4, aucune des diodes électroluminescentes supérieures 18A, respectivement inférieure 18B, n'est agencée en vis-à-vis d'une diode électroluminescente inférieure 18B, respectivement supérieure 18A.

Dans le mode de réalisation représenté aux figures 3 et 4, les diodes électroluminescentes inférieures 18B sont plus particulièrement décalées longitudinalement vers l'arrière par rapport aux diodes électroluminescentes supérieures 18A.

Selon une variante non représentée de l'invention, les diodes électroluminescentes inférieures 18B sont décalées horizontalement dans une autre direction, par exemple transversalement, par rapport aux diodes électroluminescentes supérieures 18A.

Par conséquent, les réflecteurs inférieurs 20B sont aussi décalés longitudinalement vers l'arrière par rapport aux réflecteurs supérieurs 20A.

Les réflecteurs inférieurs 20B sont avantageusement réalisés en une pièce venus de matière avec les réflecteurs supérieurs 20A formant un ainsi un bloc de réflecteurs 20 de manière à simplifier le montage du dispositif de signalisation 12.

Les réflecteurs supérieurs 20A et inférieurs 20B forment un bloc de réflecteurs 20 qui comporte un logement 32 qui est destiné à recevoir le support 16 des diodes électroluminescentes 18. Le logement 32 est ici formé par la face horizontale inférieure d'une première aile horizontale supérieure 34 qui s'étend vers l'arrière depuis le bord d'extrémité inférieur des réflecteurs supérieurs 20A.

Le bord d'extrémité supérieur des réflecteurs inférieurs 20B sont reliés au bord d'extrémité arrière de la première aile supérieure 34 par l'intermédiaire d'une deuxième aile horizontale inférieure 36 qui est parallèle à la première aile supérieure 34, et qui est agencée au-dessous du support 16. Le bord d'extrémité arrière de la deuxième aile 36 est fixé au bord d'extrémité arrière de la première aile 34, en contournant ainsi le support 16 par l'arrière.

Les ailes 34, 36 comportent aussi des orifices de passage 38 des diodes électroluminescentes 18 à l'intérieur des réflecteurs associés 20.

Le support 16 est réalisé en une seule pièce venue de matière afin que son épaisseur soit la plus fine possible pour diminuer l'encombrement vertical du dispositif de signalisation 12. Le support 16 est entièrement rigide pour faciliter son montage dans le boîtier 14.

De plus, pour diminuer l'encombrement du support 16, les bords avant 26 et arrière 28 épousent la forme du motif linéaire galbé, comme illustré à la figure 4.

Avantageusement, les ailes 34, 36 forment un masque qui est agencé derrière le support 16 et les diodes électroluminescentes 18 afin d'empêcher que les diodes électroluminescentes 18 ne soient directement visibles depuis l'extérieur du boîtier 14 à travers la vitre 15. Le masque laisse visible la surface réfléchissante des réflecteurs 20 afin de permettre le passage des rayons lumineux réfléchis vers l'extérieur du boîtier 14.

La surface réfléchissante des réflecteurs 20 comporte des motifs (non représentés) par exemple agencés en anneau concentriques autour du foyer optique afin de répartir les rayons lumineux autour de l'axe optique "A".

Selon une variante non représentée de l'invention, les diodes électroluminescentes supérieures 18A et inférieures 18B sont agencés selon un motif matriciel sur la face supérieure 22, respectivement sous la face inférieure 24, du support 16.

Dans ce cas, les diodes électroluminescentes inférieures 18B sont réparties en quinconce par rapport aux diodes électroluminescentes supérieures 18A de manière que chaque portion de support 16 ne comporte qu'une unique diode électroluminescente 18.

Selon une variante non représentée de l'invention, la plaque de support 16 est fléchie dans un plan vertical afin de conférer au faisceau lumineux une forme courbée lorsqu'il est vu de derrière le véhicule 10. Cependant, le rayon de courbure du support 16 ne doit pas être inférieur à un rayon de courbure de rupture en-deçà duquel le support 16 serait rompu.

Le dispositif de signalisation 12 selon l'invention permet d'émettre un faisceau lumineux présentant des performances photométriques améliorées, sans pour autant augmenter l'encombrement par rapport à un dispositif de signalisation connu qui est susceptible d'émettre un faisceau lumineux de même dimension mais à partir d'un nombre plus restreint de sources lumineuses.

La description a été faite en référence à un feu de stop 12, mais l'invention est bien sûr applicable à des feux de signalisation tels que des indicateurs de direction, ou des feux anti-brouillards, et à des feux d'éclairage.

## Revendications

1. Dispositif d'éclairage ou de signalisation (12) pour véhicule automobile (10) qui est susceptible d'émettre un faisceau lumineux selon un axe optique longitudinal (A), et qui comporte :
- au moins une première source lumineuse ponctuelle supérieure (18A) qui est agencée sur une première face supérieure (22) d'un support (16) rigide en forme de plaque horizontale, et qui émet des rayons lumineux selon la direction globale d'un axe d'émission sensiblement vertical (B) ;
- au moins un premier réflecteur (20A) qui est associé à la première source lumineuse supérieure (18A), et qui comporte un foyer optique qui est agencé sur la première source lumineuse associée de manière à réfléchir dans la direction de l'axe optique (A) les rayons lumineux émis par la première source lumineuse (18A) ;
- au moins une deuxième source lumineuse ponctuelle inférieure (18B) qui est agencée sous la deuxième face inférieure (24) dudit support rigide (16) ;
- au moins un deuxième réflecteur (20B) qui est associé à la deuxième source lumineuse inférieure (18B) et qui comporte un foyer optique qui est star la deuxième source lumineuse associée de manière à réfléchir dans la direction de l'axe optique (A) les rayons lumineux émis par la deuxième source lumineuse (18B),
les premier et deuxième réflecteurs (20A, 20B) forment un bloc (20) qui comporte un logement (32) destiné à recevoir le support rigide (16) des sources lumineuses ponctuelles supérieure et inférieurs (18A, 18B), le logement (32) étant formé par la face horizontale inférieure d'une première aile horizontale supérieure (34) qui s'étend vers l'arrière depuis le bord d'extrémité inférieur du premier réflecteur (20A) et qui est agencée au-dessus du support (16), le bord d'extrémité supérieur du deuxième réflecteur (20B) étant relié au bord d'extrémité arrière de la première aile supérieure (34) par l'intermédiaire d'une deuxième aile horizontale inférieure (36) parallèle à la première aile supérieure (34), et qui est agencée au-dessous du support (16), **caractérisé en ce que** les ailes (34, 36) forment un masque des sources lumineuses.

2. Dispositif (12) selon la revendication précédente, **caractérisé en ce que** la deuxième source lumineuse inférieure (18B) est décalée horizontalement dans le plan du support (16) par rapport à la première source lumineuse supérieure (18A) de manière que la chaleur émise par chaque source lumineuse (18A, 18B) soit absorbée par deux portions distinctes du support (16).

3. Dispositif (16) selon l'une quelconque des revendications précédentes, **caractérisé en ce qu'**il comporte une pluralité de sources lumineuses supérieures (18A) qui sont agencées sur la face supérieures (22) du support commun (16).

4. Dispositif (16) selon l'une quelconque des revendications précédentes, **caractérisé en ce qu'**il comporte une pluralité de sources lumineuses inférieures (18B) qui sont agencées sous la face inférieure (24) du support commun (16).

5. Dispositif (16) selon l'une quelconque des revendications 3 ou 4, **caractérisé en ce que** les sources lumineuses (18A, 18B) d'une même face sont alignées globalement selon un motif linéaire globalement transversal qui s'étend dans un plan horizontal de manière que le dispositif (12) produise au moins un faisceau lumineux linéaire transversal.

6. Dispositif (12) selon la revendication précédente, **caractérisé en ce que** le contour (26, 28, 30) du support (16) épouse le motif linéaire d'alignement des sources lumineuses (18).

7. Dispositif (12) selon l'une quelconque des revendications 5 ou 6, **caractérisé en ce que** le motif linéaire est courbé dans un plan vertical, le support commun (16) étant courbé de manière a épouser la courbe du motif d'alignement.

8. Dispositif (12) selon l'une quelconque des revendications 1 à 4, **caractérisé en ce que** les sources lumineuses (18) sont agencés selon un motif matriciel.

9. Dispositif (12) selon l'une quelconque des revendications précédentes, **caractérisé en ce que** les sources lumineuses ponctuelles (18) sont des diodes électroluminescentes.

10. Dispositif (12) selon l'une quelconque des revendications précédentes, **caractérisé en ce que** le support rigide (16) est réalisé venu de matière en une seule pièce.

## Claims

1. Lighting or signalling device (12) for a motor vehicle (10) which can emit a light beam according to a longitudinal axis (A), and which comprises:
- at least one first upper localised source of light (18A) which is arranged on a first upper surface (22) of a rigid support (16) in the form of a horizontal plate, and which emits rays of light according to the global direction of a substantially vertical axis of emission (B);
- at least one first reflector (20A) which is associated with the first upper source of light (18A), and which comprises an optical focal point which is arranged on the first associated source of light such as to reflect in the direction of the optical axis (A) the rays of light emitted by the first source of light (18A);
- at least one second lower localised source of light (18B) which is arranged below the second lower surface (24) of the said rigid support (16);
- at least one second reflector (20B) which is associated with the second lower source of light (1B), and which comprises an optical focal point which is arranged on the second associated source of light such as to reflect in the direction of the optical axis (A) the rays of light emitted by the second source of light (18B),
the first and second reflectors (20A, 20B) form a block (20) which comprises a receptacle (32) which is designed to receive the rigid support (16) of the localised upper and lower sources of light (18A, 18B), the receptacle (32) being formed by the lower horizontal surface of a first upper horizontal wing (34) which extends rearwards from the lower end edge of the first reflector (20A), and which is arranged above the support (16), the upper end edge of the second reflector (20B) being connected to the rear end edge of the first upper wing (34) by means of a second lower horizontal wing (36) parallel to the first upper wing (34), and which is arranged below the support (16), **characterised in that** the wings (34, 36) form a shield for the sources of light.

2. Device (12) according to the preceding claim, **characterised in that** the second lower source of light (18B) is offset horizontally on the plane of the support (16) relative to the first upper source of light (18A), such that the heat which is emitted by each source of light (18A, 18B) is absorbed by two distinct portions of the support (16).

3. Device (16) according to any one of the preceding claims, **characterised in that** it comprises a plurality of upper sources of light (18A) which are arranged on the upper surface (22) of the common support (16).

4. Device (16) according to any one of the preceding claims, **characterised in that** it comprises a plurality of lower sources of light (18B) which are arranged below the lower surface (24) of the common support (16).

5. Device (16) according to either of claims 3 or 4, **characterised in that** the sources of light (18A, 18B) of a single surface are aligned globally according to a globally transverse linear pattern which extends on a horizontal plane, such that the device (12) produces at least one transverse linear light beam.

6. Device (12) according to the preceding claim, **characterised in that** the contour (26, 28, 30) of the support (16) matches the linear pattern of alignment of the sources of light (18).

7. Device (12) according to either of claims 5 or 6, **characterised in that** the linear pattern is curved on a vertical plane, the common support (16) being curved such as to match the curve of the alignment pattern.

8. Device (12) according to any one of claims 1 to 4, **characterised in that** the sources of light (18) are arranged according to a matrix pattern.

9. Device (12) according to any one of the preceding claims, **characterised in that** the localised sources of light (18) are light-emitting diodes.

10. Device (12) according to any one of the preceding claims, **characterised in that** the rigid support (16) is integral in a single part.

## Patentansprüche

1. Beleuchtungs- oder Signalgebungsvorrichtung (12) für ein Kraftfahrzeug (10), die ein Lichtbündel entlang einer optischen Längsachse (A) zu emittieren vermag und die umfasst:
- wenigstens eine erste punktförmige obere Lichtquelle (18A), die auf einer ersten oberen Seite (22) eines starren Trägers (16) in Form einer waagerechten Platte angeordnet ist und die Lichtstrahlen in die allgemeine Richtung einer im Wesentlichen vertikalen Emissionsachse (B) emittiert;
- wenigstens einen ersten Reflektor (20A), der der ersten, oberen Lichtquelle (18A) zugeordnet ist und der einen optischen Brennpunkt aufweist, der auf der ersten zugeordneten Lichtquelle angeordnet ist, um die von der ersten Lichtquelle (18A) emittierten Lichtstrahlen in Richtung der optischen Achse (A) zu reflektieren;
- wenigstens eine zweite punktförmige untere Lichtquelle (18B), die unter der zweiten unteren Seite (24) des starren Trägers (16) angeordnet ist;
- wenigstens einen zweiten Reflektor (20B), der der zweiten, unteren Lichtquelle (18B) zugeordnet ist und der einen optischen Brennpunkt aufweist, der auf der zweiten zugeordneten Lichtquelle angeordnet ist, um die von der zweiten Lichtquelle (18B) emittierten Lichtstrahlen in Richtung der optischen Achse (A) zu reflektieren,
wobei der erste und der zweite Reflektor (20A, 20B) eine Einheit (20) bilden, die eine Aufnahme (32) umfasst, welche dazu bestimmt ist, den starren Träger (16) der punktförmigen oberen und unteren Lichtquelle (18A, 18B) aufzunehmen, wobei die Aufnahme (32) durch die untere waagerechte Seite eines ersten oberen waagerechten Schenkels (34) gebildet ist, der sich von dem unteren äußeren Rand des ersten Reflektors (20A) nach hinten erstreckt und der über dem Träger (16) angeordnet ist, wobei der obere äußere Rand des zweiten Reflektors (20B) mit dem hinteren äußeren Rand des ersten oberen Schenkels (34) mittels eines zu dem ersten oberen Schenkel (34) parallelen zweiten unteren waagerechten Schenkels (36) verbunden ist, der unter dem Träger (16) angeordnet ist,
**dadurch gekennzeichnet, dass** die Schenkel (34, 36) eine Blende für die Lichtquellen bilden.

2. Vorrichtung (12) nach dem vorhergehenden Anspruch,
**dadurch gekennzeichnet, dass** die zweite, untere Lichtquelle (18B) in der Ebene des Trägers (16) horizontal bezüglich der ersten, oberen Lichtquelle (18A) so versetzt ist, dass die von jeder Lichtquelle (18A, 18B) abgegebene Wärme von zwei verschiedenen Teilen des Trägers (16) aufgenommen wird.

3. Vorrichtung (12) nach einem der vorhergehenden Ansprüche,
**dadurch gekennzeichnet, dass** sie eine Vielzahl oberer Lichtquellen (18A) umfasst, die auf der oberen Seite (22) des gemeinsamen Trägers (16) angeordnet sind.

4. Vorrichtung (12) nach einem der vorhergehenden Ansprüche,
**dadurch gekennzeichnet, dass** sie eine Vielzahl unterer Lichtquellen (18B) umfasst, die unter der unteren Seite (24) des gemeinsamen Trägers (16) angeordnet sind.

5. Vorrichtung (12) nach einem der Ansprüche 3 oder 4,
**dadurch gekennzeichnet, dass** die Lichtquellen (18A, 18B) ein und derselben Seite allgemein gemäß einem allgemein quer laufenden linearen Muster aneinandergereiht sind, das in einer horizontalen Ebene so verläuft, dass die Vorrichtung (12) wenigstens ein quer gerichtetes lineares Lichtbündel erzeugt.

6. Vorrichtung (12) nach dem vorhergehenden Anspruch,
**dadurch gekennzeichnet, dass** sich der Umriss (26, 28, 30) des Trägers (16) dem linearer Reihungsmuster der Lichtquellen (18) anpasst.

7. Vorrichtung (12) nach einem der Ansprüche 5 oder 6,
**dadurch gekennzeichnet, dass** das lineare Muster in einer vertikalen Ebene gekrümmt ist, wobei der gemeinsame Träger (16) solchermaßen gekrümmt ist, dass er sich der Krümmung des Reihungsmusters anpasst.

8. Vorrichtung (12) nach einem der Ansprüche 1 bis 4,
**dadurch gekennzeichnet, dass** die Lichtquellen (18) gemäß einem Matrixmuster angeordnet sind.

9. Vorrichtung (12) nach einem der vorhergehenden Ansprüche,
**dadurch gekennzeichnet, dass** die punktförmigen Lichtquellen (18) Leuchtdioden sind.

10. Vorrichtung (12) nach einem der vorhergehenden Ansprüche,
**dadurch gekennzeichnet, dass** der starre Träger (16) einstückig geformt ist.
